Europäisches Patentamt

European Patent Office

Office européen des brevets

(11) Veröffentlichungsnummer: **0 214 416**
**B1**

(12) **EUROPÄISCHE PATENTSCHRIFT**

(45) Veröffentlichungstag der Patentschrift:
31.05.89

(51) Int. Cl.⁴: **E02F 5/14**, E02F 3/84, E02F 9/20

(21) Anmeldenummer: **86109921.6**

(22) Anmeldetag: **19.07.86**

(54) **Vorrichtung zum Schräglagenausgleich an einer Dränmaschine oder dergleichen.**

(30) Priorität: **05.09.85 DE 3531649**

(43) Veröffentlichungstag der Anmeldung:
**18.03.87 Patentblatt 87/12**

(45) Bekanntmachung des Hinweises auf die Patenterteilung:
**31.05.89 Patentblatt 89/22**

(84) Benannte Vertragsstaaten:
**BE DE FR GB NL SE**

(56) Entgegenhaltungen:
**FR-A- 2 506 114**
**US-A- 3 376 574**
**US-A- 4 028 822**
**US-A- 4 034 490**
**US-A- 4 050 171**
**US-A- 4 162 708**
**US-A- 4 221 505**

(73) Patentinhaber: **Wintjen, Erich, Giehler Strasse 12,
D-2742 Gnarrenburg-Kuhstedt(DE)**

(72) Erfinder: **Wintjen, Erich, Giehler Strasse 12,
D-2742 Gnarrenburg-Kuhstedt(DE)**

(74) Vertreter: **Eisenführ & Speiser, Martinistrasse 24,
D-2800 Bremen 1(DE)**

## Beschreibung

Die Erfindung betrifft eine Vorrichtung zum Schräglagenausgleich an einer Dränmaschine oder dergleichen, bei der Grabwerkzeuge zusammen mit einem auf einem Lasermast angeordneten Laserempfänger an einer Plattform angeordnet sind und gegenüber einem Laufwerk der Dränmaschine automatisch mittels eines Laserleitstrahls eines fest im Gelände stehenden Lasersenders in der Höhe nachgeführt werden.

Bei der Herstellung von Dränagegräben zum Einlegen von Dränagerohren ist es wegen des sehr geringen Gefälles erforderlich, daß die Grabensohle mit größter Höhengenauigkeit hergestellt wird und möglichst wenige Unebenheiten aufweist, um einen einwandfreien Ablauf des im wesentlichen drucklos fließenden Sickerwassers zu gewährleisten. Das gleichmäßige Gefälle der Grabensohle muß vor allem unabhängig von Unebenheiten der Bodenoberfläche, über die die Dränmaschine mit ihrem Laufwerk fährt, gewährleistet sein. Es ist bereits bekannt, entsprechend dem Oberbegriff des Anspruchs 1, Dränmaschinen mittels eines Laserempfängers derart entlang der Strahlungsebene eines fest im Gelände stehenden Lasersenders entlangzuführen, daß der Laserempfänger genau in der Strahlungsebene des Lasersenders verbleibt und die in einem festen Höhenabstand von dem Laserempfänger angeordneten Grabwerkzeuge unabhängig von der Bodenoberfläche einen Graben mit bestimmter Tiefenlage der Grabensohle herstellen. Diese Tiefenregelung im Abstand vom Laserleitstrahl arbeitet so lange zufriedenstellend, wie die Dränmaschine keine durch einseitige Bodenunebenheiten verursachte, zu starke Seitenneigung einnimmt. Da der Abstand zwischen dem Laserempfänger und der Unterkante der Grabwerkzeuge im Bereich von 4 bis 5 m liegt, wirken sich schon geringe Schräglagen derart aus, daß die Grabensohle stark von der gewünschten Höhenlage abweicht. Es sind zwar bereits Dränmaschinen mit pendelnd aufgehängtem Laufwerk bekannt, bei denen eine die Grabwerkzeuge und den Laserempfänger tragende Plattform nicht nur in der Höhe sondern auch in der Neigung derart nachgeführt wird, daß sowohl die Grabwerkzeuge als auch der Lasermast immer eine senkrechte Lage einnehmen. Diese Maschinen sind jedoch sehr aufwendig, weil große Massen schwenkbar aufgehängt und in ihrer Neigungslage nachgeregelt werden müssen.

Bei den bisher bekannten Dränmaschinen mit starr aufgehängter Grabwerkzeug-Plattform, die nur in der Höhenlage nachgeregelt wird, hat man sich deshalb dadurch beholfen, daß bei Schräglage der Dränmaschine die anzufahrende Solltiefe des Grabwerkzeuges von Hand um Erfahrungswerte nachgestellt wurde. Diese Betriebsweise widerspricht jedoch der sonst automatisch ablaufenden Lasersteuerung.

Aus der FR-A 2 506 114 ist bereits eine mechanische Vorrichtung zum Schräglagenausgleich an einer Dränmaschine bekannt, bei der der Lasermast um eine in Längsrichtung der Dränmaschine verlaufende Achse schwenkbar gelagert ist und durch eine automatische Lageregelung in der Senkrechten gehalten wird. Aus der Neigung des Lasermastes gegenüber dem Grabwerkzeug wird mittels einer Kulissenführung eine Höhenkorrektur für den Lasermast abgeleitet, so daß der durch die Schräglage der Dränmaschine verursachte Höhenfehler weitgehend ausgeglichen wird.

Der vorliegenden Erfindung liegt die Aufgabe zugrunde, bei Dränmaschinen mit starr aufgehängter Plattform eine Vorrichtung zum Schräglagenausgleich vorzuschlagen, die eine automatische Korrektur der Schräglage bis zu bestimmten Schräglagewinkeln bei verhältnismäßig geringem Aufwand und in robuster Bauweise ermöglicht.

Diese Aufgabe wird erfindungsgemäß dadurch gelöst, daß der Lasermast an der Plattform um eine in Längsrichtung der Dränmaschine verlaufende Achse schwenkbar gelagert ist und durch eine automatische Lageregelung in der Senkrechten gehalten wird, und bei der entsprechend dem Schräglagewinkel zwischen der Plattform und dem Lasermast die Höhenlage des Laserempfängers gegenüber der Plattform automatisch korrigiert wird, daß der Lasermast auf einem sich in Querrichtung erstreckenden Schwenkhebel angeordnet ist, der wahlweise um eine von zwei Schwenkachsen gegenüber der Plattform schwenkbar ist, daß die beiden Schwenkachsen zur Ableitung eines Höhenkorrekturwertes symmetrisch im seitlichen Abstand zu beiden Seiten der Mittelachse der Dränmaschine in deren Längsrichtung angeordnet sind und daß je nach Richtung der Schräglage der Dränmaschine die bei nicht ausgeglichener Schräglage jeweils höher liegende Schwenkachse ausgewählt wird.

Eine solche Vorrichtung zum Schräglagenausgleich hat den Vorteil, daß sie auf einfache Weise bei Dränmaschinen mit Lasersteuerung nachgerüstet werden kann oder daß noch nicht ausgelieferte Maschinen auf einfache Weise mit dieser Vorrichtung versehen werden können, ohne daß die Gesamtkonstruktion geändert werden müßte.

Eine vorteilhafte Ausführungsform ist dadurch gekennzeichnet, daß ein symmetrisch zur Mittellinie der Dränmaschine angeordneter Traghebel vorgesehen ist, dessen auf der dem Laserempfänger abgewandten Seite liegendes erstes Ende aus einer durch einen Anschlag festgelegten waagerechten Lage um eine in Längsrichtung verlaufende Achse nach oben schwenkbar auf der Plattform gelagert ist und an dem zweiten Ende eine Schwenkachse für den Schwenkhebel aufweist, daß durch Anschläge zwischen dem Traghebel und dem Schwenkhebel ein Schwenken des Schwenkhebels nur nach unten zugelassen wird und daß die beiden Schwenkachsen des Traghebels die beiden wahlweise wirksam werdenden Schwenkachsen für den Schwenkhebel bilden. Eine solche Ausbildung arbeitet mit nur wenigen beweglichen Teilen und läßt wegen dieser Einfachheit einen sehr robusten Betrieb zu.

Eine optimale Korrektur der Schräglage der Dränmaschine ist gewährleistet, wenn der Abstand der beiden wahlweise auswählbaren Schwenkachsen von der Mittellinie der Dränmaschine etwa dem 0,08 bis 0,10-fachen der Stichhöhe (Abstand zwischen der Aufhängung des Lasermastes und der Unterkante der Grabkette) der Dränmaschine beträgt.

Das Gelenk zwischen dem Traghebel und dem Schwenkhebel ist vorzugsweise derart gestaltet, daß der Traghebel vor der Schwenkachse an seinem zweiten Ende einen Anschlag und der Schwenkhebel an einer Verlängerung eine Anschlagfläche aufweisen. Es ist jedoch auch möglich, das zweite Ende des Traghebels und den Schwenkhebel durch ein Scharniergelenk miteinander zu verbinden, das ein Abknicken des Schwenkhebels nur nach unten zuläßt.

Die automatische Regelung des Lasermastes in die Senkrechte kann mittels eines Lagefühlers und einem zwischen der Plattform und dem Lasermast angreifenden hydraulischen Stellzylinder oder einen Stellmotor erfolgen. Die Länge des Lasermastes und damit die Höhe des Laserempfängers ist verstellbar und diese Verstellung hat keinen Einfluß auf die einwandfreie Korrektur der Schräglage der Dränmaschine.

Die Erfindung wird nachfolgend anhand eines Ausführungsbeispieles unter Bezug auf die beigefügten Zeichnungen näher erläutert.

Es zeigen:

Fig. 1 Eine Seitenansicht einer Dränmaschine, die mit der erfindungsgemäßen Vorrichtung ausgerüstet werden kann;

Fig. 2 eine Ansicht der Dränmaschine nach Figur 1 von vorn;

Fig. 3 eine schematische Darstellung der erfindungsgemäßen Vorrichtung zum Schräglagenausgleich ohne Schräglage;

Fig. 4 eine Darstellung der wesentlichen Teile der Vorrichtung nach Figur 3 bei einer Neigung der Dränmaschine nach der einen Seite,

Fig. 5 eine Darstellung bei einer Neigung der Dränmaschine nach der anderen Seite und

Fig. 6 eine Prinzipdarstellung der erfindungsgemäßen Vorrichtung.

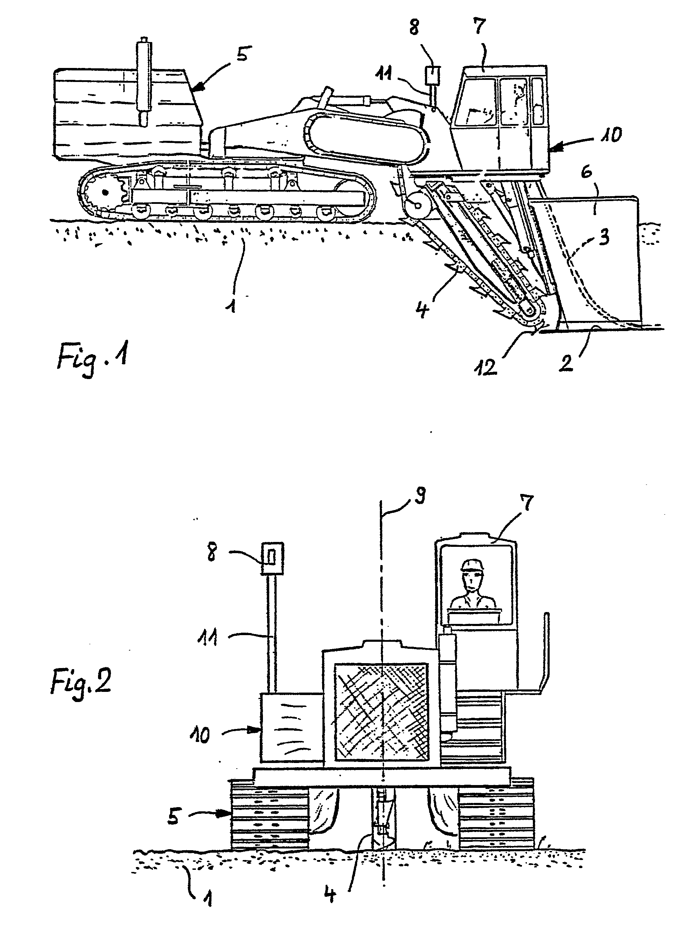

Die in den Figuren 1 und 2 dargestellte Dränmaschine weist ein über den Erdboden 1 fahrendes Laufwerk 5 mit einem Raupenantrieb, einem Antriebsmotor und entsprechenden Getriebeteilen auf. An diesem Laufwerk 5 ist eine in der Höhe verstellbare Plattform 10 gelagert, die entweder durch eine Parallelogrammführung oder durch eine andere geeignete Steuerung in der waagerechten Lage gehalten wird. Diese höhenverstellbare Plattform 10 trägt die Grabwerkzeuge, die im wesentlichen aus einer Grabkette 4 und einem Schleifkasten 6 bestehen, ein Fahrerhaus 7 sowie einen auf einem Lasermast 11 angeordneten Laserempfänger 8.

Da zwischen dem Laserempfänger 8 und der Unterkante 12 der Grabkette 4 ein fester bestimmter Abstand (Stichmaß) besteht, läßt sich mit der Grabkette 4 bei Führung des Laserempfängers 8 entlang dem Leitstrahl eines (nicht gezeigten) Laserstrahls ein Graben ausheben, dessen Sohle 2 genau parallel zum Laserleitstrahl verläuft, und zwar unabhängig von der Höhe oder Unebenheiten des Erdbodens 1. Auf die Sohle 2 des so erstellten Grabens wird ein Dränagerohr 3 verlegt.

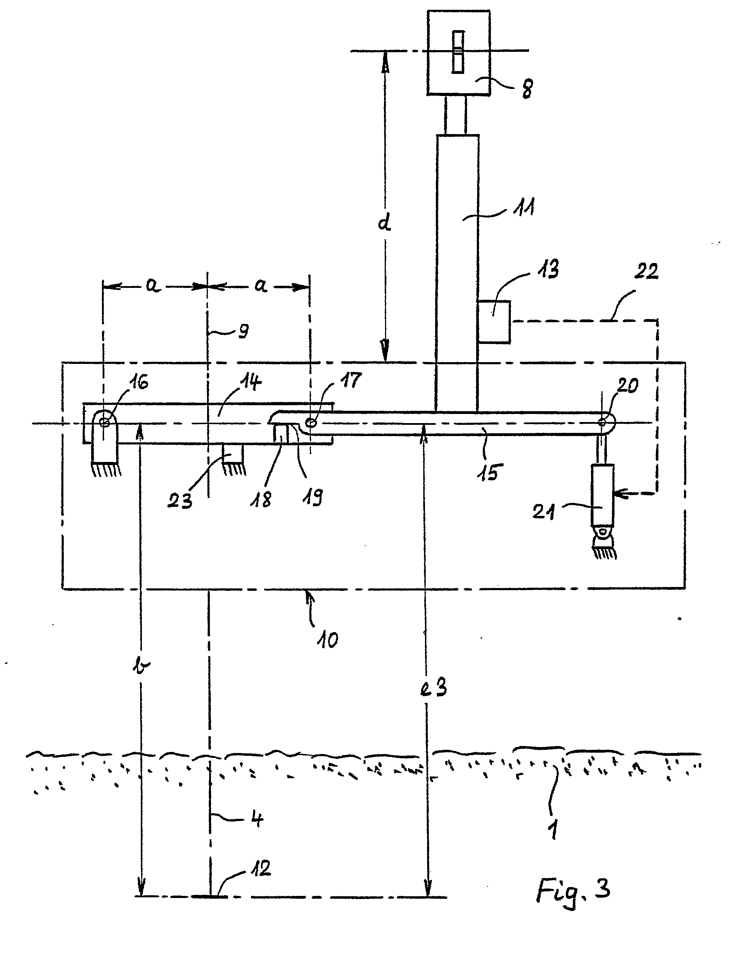

Kommt die Dränmaschine nun trotz einwandfreier Nachführung des Laserempfängers 8 entlang dem Laserleitstrahl in eine seitliche Schräglage, so verkleinert sich der Höhenabstand zwischen dem Laserempfänger 8 und der Unterkante der Grabkette 12, so daß die Tiefe der Grabensohle 2 nicht mehr dem Sollwert entspricht. Solche Fehler soll die erfindungsgemäße Vorrichtung zum Schräglagenausgleich korrigieren, und die Vorrichtung wird nun nachfolgend anhand der Figuren 3, 4, 5 und 6 beschrieben.

Auf der in der Höhe nachgeregelten Plattform 10 der Dränmaschine, die in den Figuren 3 bis 5 nur schematisch angedeutet ist, ist auf der einen Seite der Mittellinie 9 der Dränmaschine ein Traghebel 14 um eine Schwenkachse 16 schwenkbar gelagert. Der Traghebel liegt auf einem Anschlag 23 der Plattform 10 auf, befindet sich in Figur 3 in der waagerechten Lage und kann somit nur nach oben verschwenkt werden. Dieser Traghebel 14 weist auf der anderen Seite der Mittellinie 9 eine zweite Schwenkachse 17 auf, wobei beide Schwenkachsen 16 und 17 gegenüber der Mittellinie 9 einen Abstand a aufweisen. Um die Schwenkachse 17 des Traghebels 14 ist ein Schwenkhebel 15 derart schwenkbar gelagert und durch Anschläge 18, 19 begrenzt, daß er gegenüber dem Tragarm 14 nur nach unten verschwenkt, während eine Aufwärtsbewegung durch die auf einem Anschlag 18 am Traghebel aufliegende Anschlagfläche 19 des Schwenkhebels 15 verhindert wird.

In waagerechter Stellung der Plattform 10 sind der Traghebel 14 und der Schwenkhebel 15 in einer waagerechten Lage. An dem Schwenkhebel 15 ist ein Lasermast 11 befestigt, der in der Ruhelage der Plattform 10 senkrecht steht und an seinem Ende den Laserempfänger 8 trägt. Zur Verstellung der Höhe des Laserempfängers ist dieser in dem Lasermast teleskopartig verschiebbar gelagert. An dem Lasermast 11 ist ein Lagefühler 13 angeordnet, der über eine gestrichelt angedeutete Steuerverbindung 22 einen hydraulischen Stellzylinder 21 derart steuert, daß der Schwenkhebel 15 über einen Anlenkpunkt 20 automatisch in der Waagerechten und damit der Lasermast 11 folglich in der senkrechten Lage gehalten wird. Anstelle des Stellzylinders 21 kann selbstverständlich auch ein hydraulischer oder elektrischer Stellmotor vorgesehen sein. Solche Vorrichtungen sind unter dem Begriff "automatische Wasserwage" an sich bekannt.

Im Betrieb wird der Laserempfänger 8 automatisch entlang dem (nicht gezeigten) Laserleitpfad des Lasersenders geführt, wobei dessen Höhe unabhängig von der Höhe des Erdbodens 1 ist. Da der Lasermast 11 immer in der senkrechten Lage gehalten wird, bleibt der Abstand d zwischen dem Laserempfänger 8 und dem Schwenkhebel 15 konstant. Die in den Figuren 3 bis 4 eingezeichnete Stichhöhe b wird zwischen der Unterkante der Grabkette 12 und der Mastaufhängung, also der Höhe des ersten Schwenkbolzens 16 des Traghebels 14 gemessen und ist konstruktionsbedingt konstant. Der Abstand zwischen dem Laserempfänger 8 bzw. dem Laserleitstrahl und der Grabensohle 2 bzw. der Unterkante 12 der Grabkette 4 hat bei Waagerechtlage der Dränmaschine und damit der Plattform 10 den Wert b + d. Dieser Abstand wird unabhängig von Bodenunebenheiten aufrechterhalten. Die Grabtiefe e3 entspricht hier der Stichhöhe b.

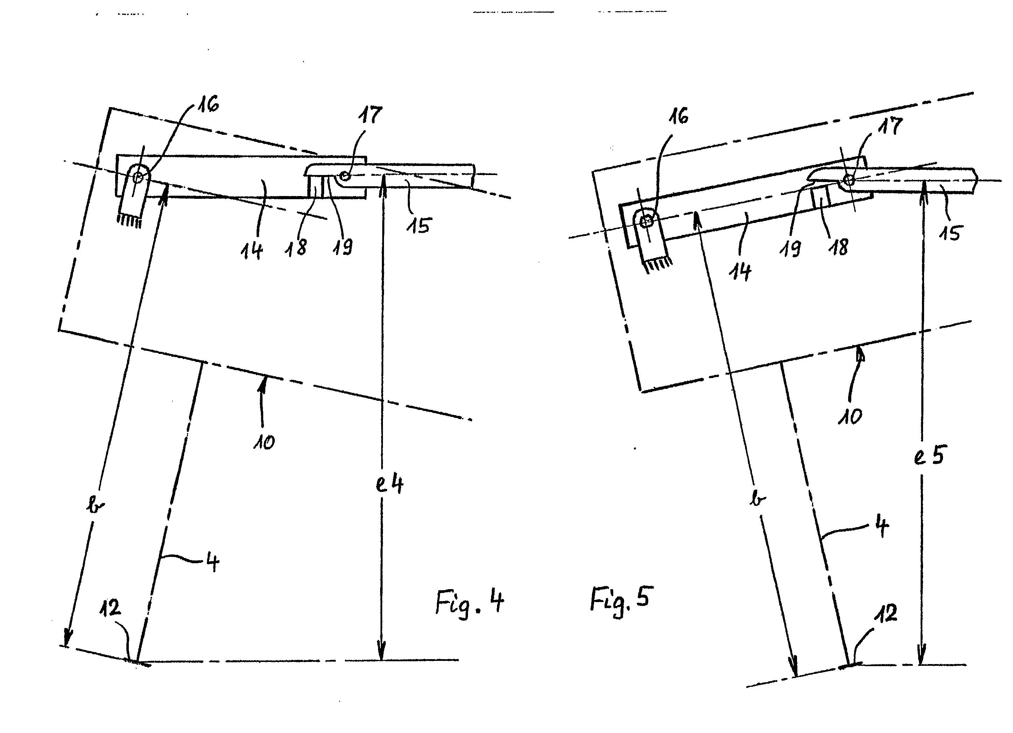

Fährt die Dränmaschine mit ihrem Laufwerk 5 jedoch einseitig über eine starke Unebenheit des Erdbodens 1 so wird sowohl das Laufwerk 5 als auch die Plattform 10 in eine in Figur 4 z. B. nach rechts geneigte Lage gekippt. Über die Lageregelung wird der Schwenkhebel 15 zusammen mit dem Traghebel 14 um den ersten Schwenkbolzen 16 nach oben in die waagerechte Lage bewegt, so daß der Lasermast 11 in der senkrechten Lage verbleibt. Die Anschlagfläche 19 und der Anschlag 18 liegen dabei aufeinander. Bei dieser Schräglage wirkt also der Schwenkbolzen 16 als Schwenkachse und es stellt sich zwischen der Höhe des Schwenkhebels 15 und der Unterkante 12 der Grabkette 4 eine effektive Grabtiefe e4 ein, die größer ist als die Stichhöhe b.

Wird die Dränmaschine und damit die Plattform 10 in die entgegengesetzte Schräglage gekippt (siehe Figur 5), so schwenkt der Schwenkhebel 15 um den zweiten Schwenkbolzen 17, während der Traghebel 14 gegenüber der Stellung nach Figur 3 in unveränderter Lage bleibt. Auf diese Weise stellt sich zwischen dem Schwenkhebel 15 und der Unterkante der Grabkette 12 ebenfalls eine effektive Grabtiefe e5 ein, die größer ist als die Stichhöhe b.

Aus Vorstehendem geht also hervor, daß durch die erfindungsgemäße Vorrichtung zum Schräglagenausgleich jeweils eine effektive Grabtiefe e eingestellt wird, die sich gegenüber der Stichhöhe b, also dem Abstand zwischen der Mastaufhängung und der Unterkante der Grabkette, soweit vergrößert, daß eine weitgehende Kompensation des Schräglageneinflußes auf die effektive Tiefe der Grabensohle 2 erfolgt.

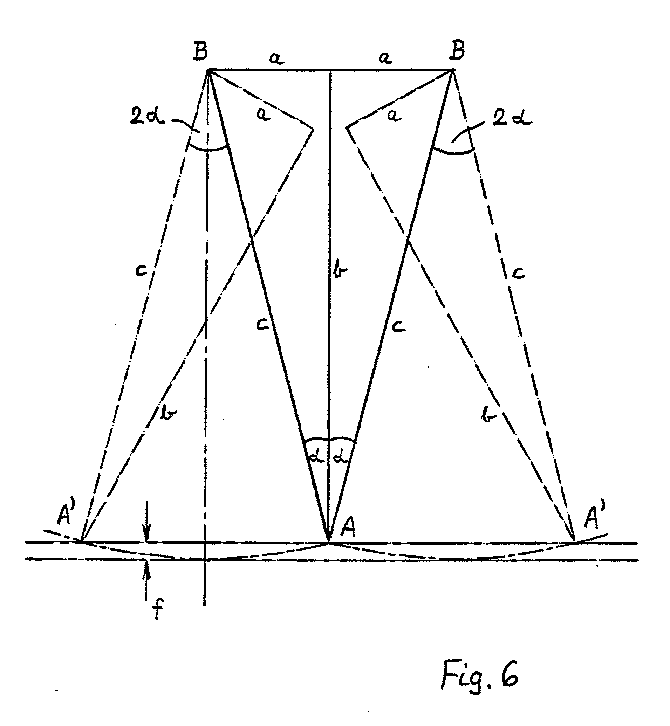

Das Prinzip der erfindungsgemäßen Vorrichtung soll nachfolgend anhand einer Prinzipdarstellung nach Figur 6 erläutert werden, die die Geometrie der Figuren 3 bis 5 in vereinfachter Darstellung zeigt. Den Schwenkpunkten 16 und 17 der Figuren 3 bis 5 entsprechen die Punkte B der Figur 6, die Unterkante 12 der Grabkette entspricht dem Punkt A bzw. den Punkten A', die Strecke b entspricht der Stichhöhe der Dränmaschine und liegt auf der Mittellinie 9 (Figur 3) und der Winkel α (Figur 6) entspricht dem halben Neigungswinkeln der Dränmaschine entsprechend den Figuren 4 bzw. 5 nach beiden Seiten.

Die durchgezogenen Linien der beiden Dreiecke ABC der Figur 6 stellen die Dränmaschine ohne Seitenneigung dar. Der senkrechte Abstand zwischen den Schwenkpunkten B und dem Punkt A (Unterkante der Grabkette 4) entspricht der Stichhöhe b. Wird nun das linke Dreieck ABC um den Schwenkpunkt B im Uhrzeigersinn geschwenkt (siehe gestricheltes Dreieck A'BC', so beschreibt der Punkt A' einen Kreisbogen und den linken Schwenkpunkt B mit einem Radius c. Ähnliches gilt für ein Schwenken des rechten Dreieckes um den rechten Schwenkpunkt B.

Der senkrechte Abstand zwischen den Punkten B' und den Punkten A bzw. A' entspricht der effektiven Grabtiefe, und der maximale Fehler f der effektiven Grabtiefe läßt sich wie folgt berechnen:

$$f = b \left( \sqrt{1 + \left(\frac{a}{b}\right)^2} - 1 \right).$$

Ist die Stichhöhe b = 250 cm und das Maß a = 20 cm, so ergibt sich

$$f = 250 \text{ cm} \left( \sqrt{1 + \left(\frac{20}{250}\right)^2} - 1 \right) = 0,8$$

Dieser Fehler f = 0,8 cm gilt bis zu einem Schräglagewinkel von bis zu 2α nach beiden Schwenkrichtungen, und dieser Winkel kann wie folgt berechnet werden:

$$\alpha = \text{arc tan} \frac{a}{b} = \text{arc tan} \frac{20}{250} = 4,6°$$
$$2\alpha = 9,2°$$

Dies bedeutet also, daß für einen Schräglagewinkel von je 9,2° in beiden Richtungen der Höhenfehler f maximal 0,8 cm beträgt. Soll ein Ausgleich über einen größeren Winkelbereich erfolgen, so ist das Verhältnis a/b zu vergrößern; hierbei vergrößert sich jedoch gleichzeitig der maximale Fehler f. Bei einem Verhältnis von a/b = 0,1 ergibt sich ein maximaler Fehler von 1,25 cm bei Schwenkwinkeln bis zu 11,4° nach jeder Seite.

Durch das erfindungsgemäße Prinzip wird also effektiv erreicht, daß abhängig von dem Schräglagenwinkel zwischen der Plattform 10 und dem Lasermast 11 ein Höhenkorrekturwert abgeleitet wird, mit dem der Lasermast bzw. der Laserempfänger in der Höhe gegenüber der Plattform 10 verstellt wird. Das Ableiten dieses Höhenkorrekturwertes erfolgt dadurch, daß der Schwenkpunkt 16 bzw. 17 (Punkt B in Figur 6) gegenüber der Mittellinie 9 (Strecke b in Figur 6) um den Abstand a seitlich versetzt ist, so daß der Lasermast 11 bzw. der Laserempfänger 8 um jeweils diese senkrechte Höhenkomponente angehoben wird, um über die Höhenverstellung der Plattform 10 und der Grabkette 4 die Höhe entsprechend zu korrigieren. Auf diese Weise wird also die sowieso vorhandene Regelvorrichtung ausgenutzt, die die Höhe der Plattform 10 gegenüber dem Laufwerk 5 entsprechend den Steuersignalen vom Laserempfänger 8 nachstellt.

Es ist jedoch auch möglich, aus dem Schwenkwinkel zwischen dem in der Senkrechten gehaltenen Lasermast 11 und der Plattform 10 über einen elektronischen Rechner einen Höhenkorrekturwert zu errechnen und die Höhe des Lasermastes 11 oder des Laserempfängers 8 gegenüber der Plattform 10 um diesen errechneten Höhenkorrekturwert zu korrigieren.

Während die vorliegende Erfindung in Verbindung mit einer Lasersteuerung beschrieben wurde, ist es selbstverständlich auch möglich, andere Leitstrahlen zu verwenden oder eine manuelle Steuerung durch Sichtmarken durchzuführen. Das erfindungsgemäße Prinzip kann selbstverständlich nicht nur bei Dränmaschinen angewendet werden, sondern auch bei anderen Erdbearbeitungsmaschinen, bei denen ein Graben oder dergleichen in parallelem Verlauf zu einem Leitstrahl unabhängig von Bodenunebenheiten erstellt werden muß.

**Patentansprüche**

1. Vorrichtung zum Schräglagenausgleich an einer Dränmaschine oder dergleichen, bei der Grabwerkzeuge (4) zusammen mit einem auf einem Lasermast (11) angeordneten Laserempfänger (8) an einer Plattform (10) angeordnet sind und gegenüber einem Laufwerk (5) der Dränmaschine automatisch entlang eines Laserleitstrahls eines fest im Gelände stehenden Lasersenders mittels eines von dem Laserempfänger (8) gesteuerten Kraftantriebes nur in der Höhe nachgeführt werden, dadurch gekennzeichnet, daß der Lasermast (11) an der Plattform (10) um eine in Längsrichtung der Dränmaschine verlaufende Achse schwenkbar gelagert ist und durch eine automatische Lageregelung (13, 20, 21) in der Senkrechten gehalten wird, und bei der entsprechend dem Schräglagewinkel zwischen der Plattform (10) und dem Lasermast (11) die Höhenlage des Laserempfängers (8) gegenüber der Plattform (10) automatisch korrigiert wird, daß der Lasermast (11) auf einem sich in Querrichtung erstreckenden Schwenkhebel (15) angeordnet ist, der wahlweise um eine von zwei Schwenkachsen (16, 17) gegenüber der Plattform (10) schwenkbar ist, daß die beiden Schwenkachsen (16, 17) zur Ableitung eines Höhenkorrekturwertes symmetrisch im seitlichen Abstand zu beiden Seiten der Mittelachse (9) der Dränmaschine in deren Längsrichtung angeordnet sind und daß je nach Richtung der Schräglage der Dränmaschine die bei nicht ausgeglichener Schräglage jeweils höher liegende Schwenkachse (16, 17) ausgewählt wird.

2. Vorrichtung nach Anspruch 1, dadurch gekennzeichnet, daß ein symmetrisch zur Mittellinie (9) der Dränmaschine angeordneter Traghebel (14) vorgesehen ist, dessen auf der dem Laserempfänger (8) abgewandten Seite liegendes erstes Ende aus einer durch einen Anschlag 23 festgelegten waagerechten Lage um eine in Längsrichtung verlaufende Achse (16) nach oben schwenkbar auf der Plattform (10) gelagert ist und an dem zweiten Ende eine Schwenkachse (17) für den Schwenkhebel (15) aufweist, daß durch Anschläge (18, 19) zwischen dem Traghebel (14) und dem Schwenkhebel (15) ein Schwenken des Schwenkhebels (15) nur nach unten zugelassen wird und daß die beiden Schwenkachsen (16, 17) des Traghebels (14) die beiden wahlweise wirksam werdenden Schwenkachsen (16, 17) für den Schwenkhebel (15) bilden.

3. Vorrichtung nach Anspruch 1 oder 2, dadurch gekennzeichnet, daß der Abstand (a) der beiden wahlweise auswählbaren Schwenkachsen (16, 17) von der Mittellinie (9) der Dränmaschine etwa dem 0,08 bis 0.10-fachen der Stichhöhe (b) der Dränmaschine beträgt.

4. Vorrichtung nach Anspruch 2, dadurch gekennzeichnet, daß der Traghebel (14) vor der Schwenkachse (17) an seinem zweiten Ende einen Anschlag (18) und der Schwenkhebel (15) an einer Verlängerung eine Anschlagfläche (19) aufweist.

5. Vorrichtung nach Anspruch 2, dadurch gekennzeichnet, daß das zweite Ende des Traghebels (14) und der Schwenkhebel (15) durch ein Scharniergelenk miteinander verbunden sind, das ein Abknicken des Schwenkhebels (15) nur nach unten zuläßt.

6. Vorrichtung nach einem oder mehreren der Ansprüche 1 bis 5, dadurch gekennzeichnet, daß die automatische Regelung des Lasermastes (11) in die Senkrechte mit einem Lagefühler (13) und einem zwischen der Plattform (10) und dem Lasermast (11) angreifenden hydraulischen Stellzylinder (21) erfolgt.

7. Vorrichtung nach einem oder mehreren der Ansprüche 1 bis 5, dadurch gekennzeichnet, daß die automatische Regelung des Lasermastes (11) in die Senkrechte mit einem Lagefühler (13) und einem zwischen der Plattform (10) und dem Lasermast (11) angreifenden Stellmotor erfolgt.

8. Vorrichtung nach einem oder mehreren der Ansprüche 1 bis 7, dadurch gekennzeichnet, daß die Länge des Lasermastes (11) und damit die Höhe des Laserempfängers (8) verstellbar ist.

**Claims**

1. Levelling means on a drainage machine or the like, with which trenching tools (4), together with a laser receiver (8) arranged on a laser mast (11), are positioned on a platform (10) and are automatically re-adjusted, only in height, relatively to a driving unit (5) of the drainage machine, along a laser guiding beam of a laser transmitter at a fixed position in the ground, by means of a power drive controlled by the laser receiver (8), characterised in that the laser mast (11) on the platform (10) is mounted to be swivellable about a shaft extending longitudinally of the drainage machine and is held in the vertical position by an automatic position control means (13, 20, 21), and with which, corresponding to the angle of slope between the platform (10) and the laser mast (11), the height position of the laser receiver (8) is automatically corrected relatively to the platform (10), that the laser mast (11) is arranged on a transversely extending rocking lever (15), pivotable at will about one of two pivot shafts (16, 17) relatively to the platform (10), that the two pivot shafts (16, 17), for deriving a height correction value, are arranged symmetrically with lateral spacing to both sides of the mean axis (9) of the drainage machine in the longitudinal direction thereof, and that, depending on the direction of the inclined position of the drainage machine, that pivot shaft (16, 17) which is higher at the time in an unbalanced inclined position is selected.

2. Means according to claim 1, characterised in that a support lever (14) is arranged symmetrically of the centre line (9) of the drainage machine, the first end of which lever, lying on the side remote from the laser receiver (8), being mounted on the platform (10) so that it can be swung upwardly about a longitudinally extending shaft (16) from a horizontal position established by a stop (23) and comprises, on the second end, a pivot shaft (17) for the rocking lever (15), that stops (18, 19) between the support lever (14) and the pivoted lever (15) only allow the latter lever to swing downwardly, and that the two pivot shafts (16, 17) of the support lever (14) form those two pivot shafts (16, 17) which become selectively operative for the pivoted lever (15).

3. Means according to claim 1 or 2, characterised in that the distance (a) of the two pivot shafts (16, 17) which can be selectively chosen, from the centre line (9) of the drainage machine, amounts to about 0.08 to 0.10 times the excavation hole (b) of the drainage machine.

4. Means according to claim 2, characterised in that the support lever (14) comprises a stop (18) before the pivot shaft (17) on its second end and the pivot lever (15) comprises an abutment surface (19) on an extension.

5. Means according to claim 2, characterised in that the second end of the support lever (14) and the pivoted lever (15) are connected to one another by a hinge which only permits a downward bending of the pivoted lever (15).

6. Means according to one or more of the claims 1 to 5, characterised in that the automatic adjustment of the laser mast (11) into the vertical position is effected with a position sensor (13) and a hydraulic positioning cylinder (21) acting between the platform (10) and the laser mast (11).

7. Means according to one or more of the claims 1 to 5, characterised in that the automatic adjustment of the laser mast (11) into the vertical position is effected by a position sensor (13) and a servomotor operating between the platform (10) and the laser mast (11).

8. Means according to one or more of the claims 1 to 7, characterised in that the length of the laser mast (11) and thus the height of the laser receiver (8) is adjustable.

## Revendications

1. Dispositif d'équilibrage d'inclinaison d'une machine de drainage ou analogue, dans lequel des outils de creusement (4) sont, conjointement à un récepteur de laser (8) disposé sur un mât (11), agencés sur une plate-forme (10) et sont, par rapport à un mécanisme de roulement (5) de la machine de drainage, automatiquement orientés uniquement dans la hauteur le long d'un rayon conducteur laser d'un émetteur de laser situé de manière fixe sur le terrain, au moyen d'un entraînement commandé par le récepteur de laser (8), caractérisé en ce que le mât (11) est supporté sur la plate-forme (10) de manière à pouvoir pivoter autour d'un axe qui s'étend dans la direction longitudinale de la machine de drainage et est maintenu à la verticale par un réglage de position automatique (13, 20, 21), en ce que la position en hauteur du récepteur de laser (8) par rapport à la plate-forme (10) est corrigée automatiquement d'une manière correspondant à l'angle d'inclinaison entre la plate-forme (10) et le mât (11), en ce que le mât (11) est agencé sur un levier pivotant (15) qui s'étend en direction transversale et qui est capable de pivoter par rapport à la plate-forme (10) d'une manière sélective autour d'un des deux axes de pivotement (16, 17), en ce que les deux axes de pivotement (16, 17) sont, pour la déviation d'une valeur de correction de hauteur, agencés symétriquement à distance latérale, de part et d'autre de l'axe central (9) de la machine de drainage, dans sa direction longitudinale, et en ce que, selon le sens de l'inclinaison de la machine de drainage, l'axe de pivotement (16, 17) situé respectivement le plus haut, lorsque l'inclinaison n'est pas équilibrée, est sélectionné.

2. Dispositif suivant la revendication 1, caractérisé en ce qu'on prévoit un levier de support (14) qui est agencé de manière symétrique par rapport à la ligne centrale (9) de la machine de drainage et dont la première extrémité, située du côté opposé au récepteur de laser (8), est supportée sur la plate-forme (10) de manière à pouvoir pivoter vers le haut autour d'un axe (16) qui s'étend en direction longitudinale, à partir d'une position horizontale fixée par une butée (23) et dont la deuxième extrémité présente un axe de pivotement (17) pour le levier pivotant (15), en ce qu'un pivotement du levier pivotant (15) n'est admis que vers le bas par des butées (18, 19) entre le levier de support (14) et le levier pivotant (15), et en ce que les deux axes de pivotement (16, 17) du levier de support (14) forment les deux axes de pivotement (16, 17), devenant sélectivement actifs, du levier pivotant (15).

3. Dispositif suivant l'une des revendications 1 et 2, caractérisé en ce que la distance (a) entre les deux axes de pivotement (16, 17) sélectionnables au choix et la ligne centrale (9) de la machine de drainage est d'environ 0,08 à 0,10 fois la hauteur de flèche (b) de la machine de drainage.

4. Dispositif suivant la revendication 2, caractérisé en ce que le levier de support (14) présente avant l'axe de pivotement (17) de sa deuxième extrémité une butée (18) et en ce que le levier de pivotement (15) présente sur un prolongement une surface de butée (19).

5. Dispositif suivant la revendication 2, caractérisé en ce que la deuxième extrémité du levier de support (14) et le levier pivotant (15) sont mutuellement reliés par une articulation qui n'admet qu'une inflexion vers le bas du levier pivotant (15).

6. Dispositif suivant une ou plusieurs des revendications 1 à 5, caractérisé en ce que le réglage automatique du mât (11) à la verticale s'effectue à l'aide d'un détecteur de position (13) et d'un vérin hydraulique de réglage (21) qui agit entre la plate-forme (10) et le mât (11).

7. Dispositif suivant une ou plusieurs des revendications 1 à 5, caractérisé en ce que le réglage automatique du mât (11) à la verticale s'effectue à l'aide d'un détecteur de position (13) et d'un moteur de commande agissant entre la plate-forme (10) et le mât (11).

8. Dispositif suivant une ou plusieurs des revendications 1 à 7, caractérisé en ce que la longueur du mât (11) et avec elle la hauteur du récepteur de laser (8) sont réglables.

Fig.1

Fig.2

EP 0 214 416 B1

Fig. 3

Fig. 4          Fig. 5

EP 0 214 416 B1

Fig. 6